# EUROPEAN PATENT APPLICATION

(11) **EP 4 202 384 A1**
(43) Date of publication of application: **28.06.2023**
(21) Application number: 21216539.3
(22) Date of filing: 21.12.2021
(51) Int. Cl.: G01J 1/04, B60Q 1/00, G01J 1/42, G02B 3/12, G01J 1/44

(54) **AUTOMOTIVE LIGHTING DEVICE AND AUTOMOTIVE VEHICLE**

(71) Applicant: Valeo Vision, 93012 Bobigny Cedex (FR)
(72) Inventor: MIMOUN, Mickael, 93012 BOBIGNY (FR); RENAUD, Pierre, 93012 BOBIGNY (FR); PLANCHE, Gregory, 93012 BOBIGNY (FR); EL IDRISSI, Hafid, 93012 BOBIGNY (FR)
(74) Representative: Valeo Visibility

(57) **Abstract**

The present invention refers to an automotive lighting device comprising a plurality of solid-state light sources (2) configured to emit light in an emission direction, a plurality of optical elements (8) configured to project the emitted light outside the luminous device, a plurality of luminous sensors (4), each luminous sensor being configured to acquire a portion of a reflection of the projected light; and processing means (3) configured to control the operation of the light sources and to receive data from the luminous sensors (4).

## Description

This invention is related to the field of automotive lighting devices, and more particularly, to the ones used to detect objects surrounding the vehicle.

Driving assistance comprises the use of sensors to inform the driver (or to directly inform the vehicle) of objects surrounding the vehicle. This is extremely useful for autonomous driving, but also for

To achieve this goal, sensors play a crucial role, since they receive the information from the exterior of the vehicle, containing the data that will be interpreted in order to create a map of the surrounding objects.

There are many different sensors which are intended to accomplish this mission. Most of them use ultrasound, with acoustic pulses. Cameras are also adapted to acquire infrared or visible ambient light.

In some cases, where the object to be sensed is small or thin, or when the reflectivity value of the object is too low, the quantity of light reflected by the same (and therefore received by the sensor) is low. A way of optimizing the light received by the sensor is therefore sought.

The present invention provides an alternative solution for the problem of by means of an automotive lighting device which comprises
- at least one light source configured to emit light;
- at least one optical element configured to project the emitted light outside the lighting device according to a projection direction;
- at least one luminous sensor configured to acquire a portion of a reflection of the projected light
- a sensor optical element, arranged in front of the luminous sensor and configured to regulate the light received by the luminous sensor; and
- processing means configured to control the operation of the light sources and to receive data from the luminous sensors.

This lighting device uses the light emitted by the light sources which are in charge of the lighting or signalling functions in order to obtain information about the surrounding objects. There is therefore no need to use an additional light source, or ultrasound devices. The same device which may be used for lighting functions (such as a Low Beam LB, a High Beam HB, a Daytime Running Light DRL, a Position Light PL, a Stop Light, a Reverse Light, a Corner Light CL, or a Turn Indicator TI), may also be used for objects detecting. Further, the use of an additional sensor optical element, dedicated to control the light received by the luminous sensor, is aimed to improve the behaviour of the detection system against objects which may produce a poor light reflection. To do so, the efficiency of the luminous sensor is sought, so the

In some particular embodiments, the light source are solid-state light sources.

The term "solid state" refers to light emitted by solid-state electroluminescence, which uses semiconductors to convert electricity into light. Compared to incandescent lighting, solid state lighting creates visible light with reduced heat generation and less energy dissipation. The typically small mass of a solid-state electronic lighting device provides for greater resistance to shock and vibration compared to brittle glass tubes/bulbs and long, thin filament wires. They also eliminate filament evaporation, potentially increasing the lifespan of the illumination device. Some examples of these types of lighting comprise semiconductor light-emitting diodes (LEDs), organic light-emitting diodes (OLED), or polymer light-emitting diodes (PLED) as sources of illumination rather than electrical filaments, plasma or gas.

In some particular embodiments, the sensor optical element comprises a lens.

A lens is a suitable example of this sensor optical element, since it allows optimization of different optical parameters.

In some particular embodiments, the lens of the sensor optical element has a f-value comprised between f/0.5 and f/5.

The f-value (focal ratio of f-stop) is a parameter which represents the luminosity of the captured image. A lower f-value indicates that the image is more luminous that the same features captured by a lens with a higher f-value. Hence, a low f-value is sought to capture more detail of the images. Hence, ranges of f-values comprised between 0.5 and 1, or between 0.5 and 1.5, or between 0.5 and 2 are especially advantageous. A low f-value allows a higher rate of information received per second in the luminous sensor.

However, a low value of f-value, being the ratio of the lens' focal length to the diameter of the entrance pupil, is achieved by reducing the focal length or by increasing the entrance pupil. Since the entrance pupil is sought to be small (there is no room in the lighting device for a big aperture), the focal length should be reduced.

In some particular embodiments, the lens of the sensor optical element has a focal length comprised between 1 mm and 10 mm.

An extremely reduced focal length is sought to produce a low f-value.

In some particular embodiments, the lens of the sensor optical element has an entrance pupil of a diameter comprised between 2 mm and 30 mm.

These values of entrance pupil are defined by the available room in the vehicle dedicated to the luminous sensor.

In some particular embodiments, the sensor optical element is configured to limit the field of view of the luminous sensor to a range which is comprised in an interval from -40° to +40°.

This means that the sensor optical element is configured to limit the field of view of the sensor to a range which may be, for example, (-30°, +30°); since this range is contained within the main interval of (-40, +40°). This limitation is useful to focus on the relevant objects.

In some particular embodiments, the lens of the sensor optical element has an opaque element to limit the entrance pupil of the light received by the luminous sensor.

An opaque object which is outside the luminous sensor is suitable for a mechanic and effective limitation of the entrance pupil of the luminous sensor, acting as a shutter for the luminous sensor.

In some particular embodiments, the opaque object is a folder or a gasket or a frame.

A folder is an element which is commonly used to limit the light pattern of the low beam, so their shapes and behaviours have been thoroughly tested. A gasket may be also used to provide watertightness to the lens and the sensor, and a frame can be easily customized to provide the best limitation to the field of view of the lens and the luminous sensor. Any other element which is suitable to be used as a shutter could be used for this purpose.

In some particular embodiments, the lens of the sensor optical element is an active lens which comprises a liquid configured to vary the optic features of the lens.

In some particular embodiments, active control of the lens is performed by means of introducing a liquid inside the lens. This liquid has some optical properties which may be modified (for example, by applying an electric current to the liquid) so that the optical properties of the lens may be optimized without replacing or moving the lens. This calibration is useful when an active control of the lens properties is required.

In some particular embodiments, the solid-state light sources comprise light emitting diodes or laser diodes.

These types of light sources are widely used in automotive vehicles for driving lighting and signalling. With the present invention, the same light sources may also be used for objects detection.

In some particular embodiments, the sensor optical element is configured to set the sensor exposure time between 0.001 and 0.06 s.

With this option, the sensor exposure time is adapted to the optical features established by the sensor optical element, thus avoiding the saturation of the image acquired by the luminous sensor. A sensor exposure time of 0.06s is close to the frame rate of common sensors.

In a second inventive aspect, the invention provides an automotive vehicle comprising an automotive lighting device according to the first inventive aspect.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
[Fig. 1] shows a general perspective view of an automotive lighting device according to the invention installed in an automotive vehicle.
[Fig. 2] shows a detailed view of some elements of an automotive lighting device according to the invention.

In these figures, the following reference numbers are used for each of the following elements:
- 1: Headlamp
- 2: LEDs
- 3: Processing unit
- 4: Photodiode
- 5: Optical system
- 6: Lens
- 7: Shutter
- 8: Module lens
- 100: Automotive vehicle

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included.

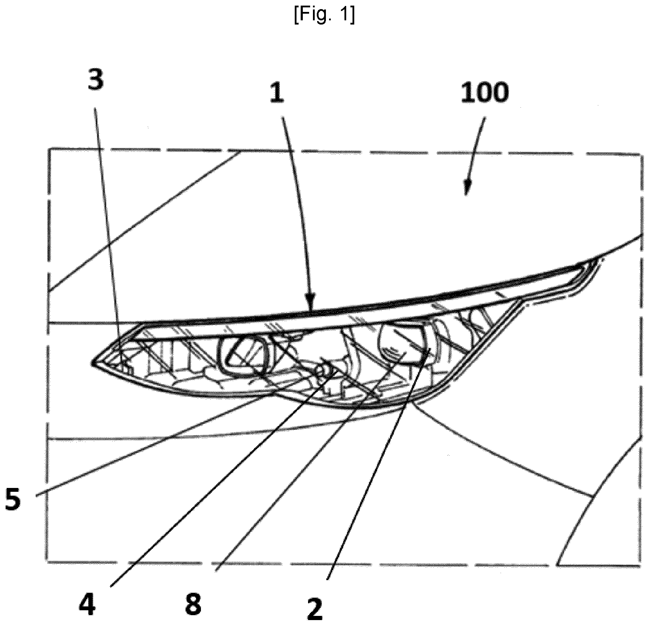

Figure 1 shows an automotive lighting device 1 according to the invention installed in an automotive vehicle 100.

In this figure, the following elements are seen
- a lighting module with light-emitting diodes (LED) 2 intended to emit light
- a module lens 8, configured to project the emitted light of the LEDs 2 outside the lighting device in a projection direction
- a photodiode 4 configured to acquire the light of the LEDs 2;
- a photodiode optical system 5 arranged in front of the photodiode 4 configured to regulate the light received by the photodiode 4; and
- a processing unit 3 configured to control the operation of the light sources and to receive data from the photodiode 4.

The lighting module projects light outside the lighting device, and this light is reflected by outer objects and captured by the photodiode 4, which sends the information about captured light to the processing means 3 so that these outer objects are detected.

The processing unit 3 is configured to receive power from a power source and prepare the frequency and shape of the light to be emitted by the LEDs 2.

The aim of the photodiode optical system 5 is to regulate the light received by the photodiode 4, so that it is able to detect small objects. To do so, the amount of light is maximized by the optical system 5 having a f-value of f/0.5.

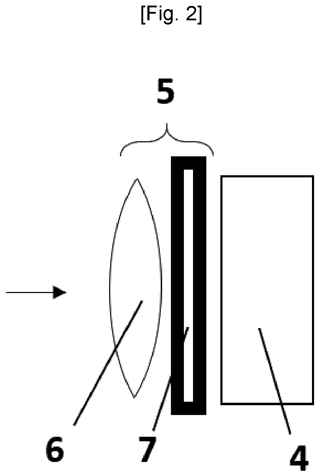

Figure 2 shows a detailed view of some elements of an automotive lighting device according to the invention.

In particular, this figure illustrates the photodiode 4 and the photodiode optical system 5.

The optical system 5 comprises a photodiode lens 6 and a shutter 7. Behind them, the photodiode 4 captures the light modified by the optical system 5.

The lens is intended to have a focal length of 3.73 mm, to provide a lower f-value without an excessive dimension of the pupil entrance.

The shutter is intended to provide a pupil entrance of 7.46 mm, which is enough to keep the f-value as lowest as possible without being excessively large to fit in the lighting device. The resultant sensor exposure time is 1ms, which provides a good data acquisition rate.

In different embodiments, the shutter may be characterized as a folder, a gasket and/or a frame. These elements provide a total surrounding of the field of view of the photodiode, so they may be used for a customized limitation of the field of view, both vertically and horizontally. In this case, the field of view is limited to a range of (-30°, +30°).

Further, these elements may provide further watertightness or stiffness to the operation of the photodiode, which may be desirable in some circumstances.

In different embodiments, the lens may have an active control of their optical properties. Active control of the lens is performed, e.g., by means of introducing a liquid inside the lens. This liquid has some optical properties which may be modified (for example, by applying an electric current to the liquid) so that the optical properties of the lens may be optimized without replacing or moving the lens. This calibration is useful when an active control of the lens properties is required.

This invention may be used in a matrix configuration such as a high-resolution module, having a resolution greater than 2000 pixels. However, no restriction is attached to the technology used for producing the projection modules.

A first example of this matrix configuration comprises a monolithic source. This monolithic source comprises a matrix of monolithic electroluminescent elements arranged in several columns by several rows. In a monolithic matrix, the electroluminescent elements can be grown from a common substrate and are electrically connected to be selectively activatable either individually or by a subset of electroluminescent elements. The substrate may be predominantly made of a semiconductor material. The substrate may comprise one or more other materials, for example non-semiconductors (metals and insulators). Thus, each electroluminescent element/group can form a light pixel and can therefore emit light when its/their material is supplied with electricity. The configuration of such a monolithic matrix allows the arrangement of selectively activatable pixels very close to each other, compared to conventional light-emitting diodes intended to be soldered to printed circuit boards. The monolithic matrix may comprise electroluminescent elements whose main dimension of height, measured perpendicularly to the common substrate, is substantially equal to one micrometre.

The monolithic matrix is coupled to the control centre so as to control the generation and/or the projection of a pixelated light beam by the matrix arrangement. The control centre is thus able to individually control the light emission of each pixel of the matrix arrangement.

Alternatively to what has been presented above, the matrix arrangement may comprise a main light source coupled to a matrix of mirrors. Thus, the pixelated light source is formed by the assembly of at least one main light source formed of at least one light emitting diode emitting light and an array of optoelectronic elements, for example a matrix of micro-mirrors, also known by the acronym DMD, for "Digital Micro-mirror Device", which directs the light rays from the main light source by reflection to a projection optical element. Where appropriate, an auxiliary optical element can collect the rays of at least one light source to focus and direct them to the surface of the micro-mirror array.

Each micro-mirror can pivot between two fixed positions, a first position in which the light rays are reflected towards the projection optical element, and a second position in which the light rays are reflected in a different direction from the projection optical element. The two fixed positions are oriented in the same manner for all the micro-mirrors and form, with respect to a reference plane supporting the matrix of micro-mirrors, a characteristic angle of the matrix of micro-mirrors defined in its specifications. Such an angle is generally less than 20° and may be usually about 12°. Thus, each micro-mirror reflecting a part of the light beams which are incident on the matrix of micro-mirrors forms an elementary emitter of the pixelated light source. The actuation and control of the change of position of the mirrors for selectively activating this elementary emitter to emit or not an elementary light beam is controlled by the control centre.

In different embodiments, the matrix arrangement may comprise a scanning laser system wherein a laser light source emits a laser beam towards a scanning element which is configured to explore the surface of a wavelength converter with the laser beam. An image of this surface is captured by the projection optical element.

The exploration of the scanning element may be performed at a speed sufficiently high so that the human eye does not perceive any displacement in the projected image.

The synchronized control of the ignition of the laser source and the scanning movement of the beam makes it possible to generate a matrix of elementary emitters that can be activated selectively at the surface of the wavelength converter element. The scanning means may be a mobile micro-mirror for scanning the surface of the wavelength converter element by reflection of the laser beam. The micro-mirrors mentioned as scanning means are for example MEMS type, for "Micro-Electro-Mechanical Systems". However, the invention is not limited to such a scanning means and can use other kinds of scanning means, such as a series of mirrors arranged on a rotating element, the rotation of the element causing a scanning of the transmission surface by the laser beam.

In another variant, the light source may be complex and include both at least one segment of light elements, such as light emitting diodes, and a surface portion of a monolithic light source.

## Claims

1. Automotive lighting device (10) comprising
- at least one light source (2) configured to emit light;
- at least one optical element (8) configured to project the emitted light outside the lighting device according to a projection direction;
- at least one luminous sensor (4) configured to acquire a portion of a reflection of the projected light
- a sensor optical element, arranged in front of the luminous sensor and configured to regulate the light received by the luminous sensor, wherein he sensor optical element comprises a lens with a f-value comprised between f/0.5 and f/5; and
- processing means (3) configured to control the operation of the light sources and to receive data from the luminous sensors.

2. Automotive lighting device (10) according to claim 1, wherein the lens of the sensor optical element has a focal length comprised between 1 mm and 10 mm.

3. Automotive lighting device (10) according to any of the preceding claims, wherein the lens of the sensor optical element has an entrance pupil of a diameter comprised between 2 mm and 30 mm.

4. Automotive lighting device (10) according to any of the preceding claims, wherein the sensor optical element is configured to limit the field of view of the luminous sensor to a range which is comprised in an interval from -40° to +40°.

5. Automotive lighting device (10) according to any of the preceding claims, wherein the lens (6) of the sensor optical element has an opaque element (7) to limit the entrance pupil of the light received by the luminous sensor (4).

6. Automotive lighting device (10) according to claim 5, wherein opaque element is a frame, a gasket or a folder.

7. Automotive lighting device (10) according to any of the preceding claims, wherein the lens of the sensor optical element is an active lens which comprises a liquid configured to vary the optic features of the lens.

8. Automotive lighting luminous device (10) according to any of the preceding claims, wherein the light sources are solid-state light sources.

9. Automotive lighting device (10) according to claim 8, wherein the solid-state light sources comprise light emitting diodes or laser diodes.

10. Automotive lighting luminous device (10) according to any of the preceding claims, wherein the sensor optical element is configured to set the sensor exposure time between 0.001 and 0.06 s.

11. Automotive vehicle (100) comprising an automotive lighting device (10, 11) according to any of the preceding claims.
